# FASCICULE DE BREVET EUROPEEN

(11) **EP 3 886 361 B1**
(45) Date de publication et mention de la délivrance du brevet: **21.10.2026**
(21) Numéro de dépôt: 21162082.8
(22) Date de dépôt: 11.03.2021
(51) Int. Cl.: H04L 9/32

(54) **DISPOSITIF DE FONCTION PHYSIQUEMENT NON CLONABLE**
PHYSISCH NICHT KLONBARES FUNKTIONSGERÄT
PHYSICALLY NON-CLONABLE FUNCTION DEVICE

(30) Priorité: 25.03.2020 FR 2002929
(43) Date de publication de la demande: 29.09.2021
(73) Titulaire: STMicroelectronics (Rousset) SAS, 13790 Rousset (FR)
(72) Inventeur: LA ROSA, Francesco, 13790 ROUSSET (FR)
(74) Mandataire: Casalonga

(56) Documents cités:
- US-A1- 2019 068 383
- US-B1- 9 966 954

## Description

Des modes de mise en œuvre et de réalisation de l'invention concernent les fonctions physiquement non clonables (PUF : Physical Unclonable Function), et tout particulièrement celles réalisées au sein d'un circuit intégré.

Une fonction physiquement non clonable permet de générer automatiquement un code unique non prédictible qui dépend de caractéristiques physiques aléatoires ou partiellement aléatoires de la fonction physiquement non clonable. Ces caractéristiques physiques peuvent être provoquées par des variations durant la fabrication de la fonction physiquement clonable.

Ainsi, le clonage d'une telle fonction est très difficile voire impossible.

Par ailleurs, le contenu du code généré, qui est unique, car différent d'une fonction physiquement non clonable à une autre fonction physiquement non clonable, ne peut pas être prévu et peut dépendre par exemple d'une configuration particulière de composants lors de la mise sous tension de la fonction. Ainsi, par exemple, une fonction physiquement non clonable peut être réalisée par une mémoire non volatile qui présente un contenu lors de la mise sous tension qui dépend des caractéristiques physiques partiellement aléatoires de la mémoire, ces variations de fabrication conduisant à des caractéristiques physiques différentes pour différentes mémoires.

D'une part, il est souhaitable que les fonctions physiquement non clonables soient suffisamment robustes pour être invariables notamment dans le temps, suite à des utilisations répétées, et en cas de variations de température.

D'autre part, il est souhaitable que les variations aléatoires des caractéristiques physiques soient facilement identifiables pour distinguer sans équivoque différentes données.

En outre, il est souhaitable que les réalisations de fonctions physiquement non clonables ne nécessitent pas ou peu d'étapes de fabrication dédiées.

Les codes uniques non-prédictibles comportent typiquement une suite de données aléatoires et sont principalement utilisés en tant que clés de chiffrement. Ces données sont typiquement secrètes.

On peut réaliser des fonctions physiquement non clonables à l'aide par exemple de mémoires vives ou non volatiles, ou encore d'oscillateurs en anneaux ou encore de circuits logiques spécifiques.

La demande de brevet US 2019/068383 A1 enseigne d'utiliser le claquage de la grille d'un transistor à programmation unique (One-Time Programmable, OTP) pour l'implémentation d'une fonction physiquement non clonable.

Cependant, ces dispositifs de l'art antérieur peuvent dans certains cas être plus ou moins facilement détectables au sein du circuit intégré ou alors être peu robustes vis-à-vis de modifications de température ou de vieillissement ou encore être sensibles à des attaques par injection de faute, ou encore d'un encombrement surfacique pénalisant.

Il existe donc un besoin de proposer des structures de fonction physiquement non clonable robustes vis-à-vis de variations extérieures et/ou de vieillissement, dont les données sont clairement discriminables en lecture, tout en étant difficilement extractibles par des attaques de tiers. Il serait en outre appréciable que les structures soient faciles à réaliser dans les technologies existantes et présentent un encombrement surfacique non pénalisant.

Selon un aspect il est proposé un système comprenant un dispositif de fonction physiquement non clonable, ce dispositif comprenant
- un premier ensemble de cellules-mémoires non volatiles possédant chacune un transistor de sélection enterré dans un substrat semiconducteur et un transistor d'état du type à appauvrissement ayant une grille de commande et une grille flottante électriquement connectées, les transistors d'état ayant des tensions de seuil effectives respectives appartenant à une distribution aléatoire commune, et
- des moyens de traitement configurés pour délivrer à une interface de sortie du dispositif, un groupe de données de sortie à partir d'une lecture des tensions de seuil effectives des transistors d'état des cellules-mémoires dudit premier ensemble.

Le groupe de données de sortie est typiquement un code unique non prédictible formé d'une suite de données aléatoires qui peut être avantageusement utilisé en tant que clé de chiffrement/déchiffrement.

Ce type de cellules-mémoires non volatiles avec transistor de sélection enterré est une structure particulièrement compacte. Elle a été décrite en détails dans la demande de brevet US 2013/0 228 846.

Mais, dans le cas présent, par rapport à ces cellules classiques, les transistors d'état des cellules-mémoires du premier ensemble sont du type à appauvrissement et ont une grille de commande et une grille flottante électriquement connectées.

Ces caractéristiques sont particulièrement avantageuses car il est alors possible de lire une cellule-mémoire du premier ensemble en appliquant une tension nulle sur la grille de commande, par exemple en reliant cette grille de commande à la masse, car le transistor d'état est normalement passant.

En outre, puisque l'on a une tension nulle en lecture sur la grille de commande, on n'induit pas de contrainte lors de la lecture (« read stress ») dans le diélectrique de grille ce qui permet de réduire fortement, voire de supprimer, le risque d'apparition d'un phénomène connu par l'homme du métier sous le vocable anglosaxon de « disturb » en lecture (« read disturb ») pouvant se traduire par une modification de la valeur logique du bit stocké.

Par ailleurs, le transistor d'état étant du type à appauvrissement, le caractère passant, (« normally on ») du transistor d'état lorsque la cellule-mémoire est par exemple dans un état vierge et qu'une tension nulle est appliquée sur la grille de commande, est lié à la valeur de la tension de seuil dans l'état vierge de cette cellule-mémoire qui peut par exemple être choisie négative ou sensiblement nulle.

A titre indicatif, cette tension de seuil peut être de l'ordre de -1 volts.

Les transistors d'état de toutes les cellules-mémoires ont la même tension de seuil théorique. Mais, ce sont les tensions de seuil effectives, c'est-à-dire les valeurs réelles des tensions de seuil, qui varient légèrement suivant la dispersion aléatoire, par exemple due à des aléas physiques de fabrication.

Et ces cellules offrent une très large dispersion des tensions de seuil effectives.

La dispersion obtenue des tensions de seuil effectives est par exemple égale à -1 volts plus ou moins 100%.

Et, la distribution aléatoire commune est avantageusement une distribution de tensions de seuil effectives de transistors d'état, à grilles flottante et de commande connectées, de cellules-mémoires vierges n'ayant jamais été écrites.

Selon un mode de réalisation, chaque cellule-mémoire comporte un oxyde de grille disposé entre la grille flottante du transistor d'état et le substrat, l'épaisseur de cet oxyde de grille étant supérieure à 8 nanomètres, par exemple comprise entre 8 et 10 nanomètres.

Un tel oxyde de grille épais permet d'obtenir une bonne robustesse du dispositif de fonction physiquement non clonable vis-à-vis du vieillissement.

Selon un mode de réalisation, les moyens de traitement comportent des moyens de lecture configurés pour effectuer ladite lecture des tensions de seuil effectives des transistors d'état et le premier ensemble de cellules-mémoire non-volatiles est organisé en deux premiers sous-ensembles matriciels disposés symétriquement par rapport aux moyens de lecture, toutes les lignes ou rangées des deux premiers sous-ensembles matriciels étant parallèles.

Par ailleurs, les moyens de lecture sont configurés pour effectuer ladite lecture qui comporte alors des lectures différentielles des tensions de seuil effectives des transistors d'état des paires de cellules-mémoires symétriques et situées respectivement dans les deux premiers sous-ensembles sur des colonnes homologues de ces deux premiers sous-ensembles.

Deux colonnes homologues des deux premiers sous-ensembles s'entendent comme étant des colonnes ayant la même adresse colonne.

La répartition du premier ensemble en deux sous-ensembles matriciels symétriques associés à l'approche différentielle au niveau de la lecture, est particulièrement avantageuse en ce sens qu'elle permet d'augmenter la dispersion au sein de la distribution aléatoire commune des tensions de seuil effectives des transistors d'état.

Il est en outre particulièrement préférable de s'assurer de la fiabilité des cellules-mémoires du premier ensemble de façon à ne conserver pour la délivrance du groupe de données de sortie, que les paires de cellules-mémoire dont le contenu est fiable c'est-à-dire non susceptible de varier d'une mise sous tension à une autre.

Aussi, selon un mode de réalisation, les moyens de traitement comportent avantageusement un deuxième ensemble de cellules-mémoires possédant chacune un transistor de sélection enterré dans un substrat semiconducteur et un transistor d'état ayant une grille de commande et une grille flottante, les cellules-mémoires du deuxième ensemble étant destinées à contenir des informations de fiabilité représentatives de la fiabilité ou de la non-fiabilité des contenus des paires de cellules-mémoire du premier ensemble.

A la différence des cellules-mémoire du premier ensemble, les cellules-mémoires du deuxième ensemble qui sont destinées à contenir les informations de fiabilité, ne comportent pas de transistors d'état ayant leur grille flottante et leur grille de commande électriquement connectées. Par contre, ces transistors d'état sont également avantageusement du type à appauvrissement.

Ainsi tout comme il est possible (comme indiqué ci-avant) de lire une cellule-mémoire du premier ensemble en appliquant une tension nulle sur la grille de commande, par exemple en reliant cette grille de commande à la masse, car le transistor d'état est normalement passant, il est également possible de lire une cellule-mémoire du deuxième ensemble en appliquant une tension nulle sur la grille de commande car le transistor d'état d'une telle cellule est également avantageusement normalement passant.

En d'autres termes, les cellules-mémoires du deuxième ensemble sont des cellules-mémoires classiques à transistor d'état et à transistor de sélection enterré, par exemple du type de celles décrites dans la demande de brevet Etats Unis précédemment citée, mais avec par exemple un implant d'arsenic dans la région de canal de façon à obtenir des transistors d'état du type à appauvrissement.

Selon un mode de réalisation, le deuxième ensemble comporte un agencement matriciel de cellules-mémoires partageant les mêmes colonnes que celles de l'agencement matriciel de cellules-mémoires du premier ensemble.

Ceci facilite ainsi le décodage car le premier ensemble et le deuxième ensemble partagent alors le même décodage colonne.

Par ailleurs, il est avantageux en outre que le deuxième ensemble comporte également deux deuxièmes sous-ensembles respectivement répartis de part et d'autre des premiers sous-ensembles.

Par ailleurs, les informations de fiabilité associées aux paires de cellules-mémoires sont stockées dans des cellules-mémoires du deuxième ensemble situées sur les mêmes colonnes que celles sur lesquelles sont situées lesdites paires correspondantes de cellules-mémoires du premier ensemble.

Un tel stockage symétrique des informations de fiabilité de part et d'autre des premiers sous-ensembles, permet une lecture plus facile.

Selon un mode de réalisation, les moyens de traitement comportent des premiers moyens de génération configurés pour générer lesdites informations de fiabilité en prenant en compte une valeur de marge sur les lectures différentielles des tensions de seuil effectives des transistors d'état des paires de cellules-mémoires.

Plus précisément, et selon une première variante possible, les premiers moyens de génération comprennent :
- les moyens de lecture mentionnés ci-avant configurés pour effectuer en outre, pour chaque paire de cellules-mémoire du premier ensemble,
   - une première lecture de la différence entre d'une part le courant écoulé par une première cellule-mémoire de ladite paire augmenté d'un courant de référence représentatif de ladite valeur de marge et d'autre part le courant écoulé par la deuxième cellule-mémoire de ladite paire, de façon à obtenir une première donnée binaire,
   - une deuxième lecture de la différence entre d'une part le courant écoulé par la deuxième cellule-mémoire augmenté dudit courant de référence et d'autre part le courant écoulé par la première cellule, de façon à obtenir une deuxième donnée binaire,
- des moyens de comparaison configurés pour comparer l'une des première et deuxième données binaires avec l'inverse de l'autre des première et deuxième données binaires, et pour délivrer ladite information de fiabilité associée à ladite paire de cellules-mémoires, dont la valeur logique dépend du résultat de la comparaison, et
- des moyens d'écriture pour écrire ladite information de fiabilité dans la cellule-mémoire correspondante du deuxième ensemble.

Alors que dans cette variante, on stocke une seule information de fiabilité pour une paire de cellules-mémoires du premier ensemble, il est possible, dans une autre variante, de stocker un nombre impair d'informations de fiabilité dites « provisoires », puis de sélectionner l'information de fiabilité proprement dite par un vote majoritaire sur les informations de fiabilité provisoires.

Plus particulièrement, selon cette autre variante, les premiers moyens de génération comprennent
- les moyens de lecture configurés pour effectuer, pour chaque paire de cellules-mémoires du premier ensemble,
   a) une première lecture de la différence entre d'une part le courant écoulé par une première cellule-mémoire de ladite paire augmenté d'un courant de référence représentative de ladite valeur de marge et d'autre part le courant écoulé par la deuxième cellule-mémoire de ladite paire, de façon à obtenir une première donnée binaire,
   b) une deuxième lecture de la différence entre le courant écoulé par la deuxième cellule-mémoire augmenté du courant de référence et d'autre part le courant écoulé par la première cellule, de façon à obtenir une deuxième donnée binaire,
- des moyens de comparaison configurés pour
   c) comparer l'une des première et deuxième données binaires avec l'inverse de l'autre des première et deuxième données binaires et
   d) délivrer une information de fiabilité provisoire associée à ladite paire de cellules-mémoire, dont la valeur logique dépend du résultat de la comparaison,
- des moyens d'écriture configurés pour
   e) écrire ladite information de fiabilité provisoire dans la cellule-mémoire correspondante du deuxième ensemble, et
- des moyens de commande configurés pour faire exécuter, un nombre impair de fois, aux moyens de lecture, de comparaison et d'écriture les étapes a), b), c), d) et e) de façon à obtenir un nombre impair d'informations de fiabilité provisoires stockées, et
- des moyens de sélection configurés pour effectuer un vote majoritaire sur les valeurs logiques des informations de fiabilité provisoires, de façon à sélectionner ladite information de fiabilité.

Selon un mode de réalisation, les moyens de traitement comprennent des deuxièmes moyens de génération configurés pour générer ledit groupe de données de sortie au moins à partir des lectures différentielles des tensions de seuil effectives des transistors d'état des paires de cellules-mémoires, et desdites informations de fiabilité de ces paires de cellules-mémoires.

Bien que les modes de réalisation mentionnés ci-avant permettent d'apporter une solution satisfaisante au problème posé, il est possible, dans certains cas, que des facteurs de dissymétrie de la structure puissent affecter le caractère aléatoire du groupe de données de sortie délivré par le dispositif de fonction physique non clonable.

Aussi, est-il avantageusement prévu, que les deuxièmes moyens de génération soient configurés pour générer ledit groupe de données de sortie non seulement à partir des lectures différentielles des tensions de seuil effectives des transistors d'état des paires de cellules-mémoire et des informations de fiabilité de ces paires de cellules-mémoires, mais également à partir des adresses des colonnes dans lesquelles se situent lesdites paires de cellules-mémoires.

Et, selon un mode de réalisation, on peut utiliser par exemple le bit de poids faible de l'adresse de la colonne dans laquelle se situe ladite paire de cellules-mémoires.

Plus précisément, les deuxièmes moyens de génération peuvent alors comporter
- lesdits moyens de lecture configurés pour effectuer pour chaque paire de cellules-mémoire, ladite lecture différentielle de façon à obtenir une première information binaire ayant une première valeur logique,
- des moyens d'inversion configurés pour inverser ou non ladite première valeur logique en fonction de la valeur logique du bit de poids faible de l'adresse de la colonne dans laquelle se situe ladite paire et délivrer une deuxième information binaire ayant une deuxième valeur logique, et
- des moyens de masquage configurés pour conserver la deuxième information binaire en tant que donnée de sortie, uniquement si ladite paire de cellules-mémoire est associée à une information de fiabilité la désignant comme fiable.

Il est par ailleurs particulièrement avantageux que le premier ensemble de cellules-mémoire, le deuxième ensemble de cellules-mémoire et les moyens de traitement soient situés au sein d'un même circuit intégré.

En effet, cela introduit un haut niveau de protection contre des analyses physiques intrusives.

Plus précisément, si un attaquant effectue une attaque face arrière du circuit intégré, pour s'approcher au plus près des transistors d'état, il va détruire les transistors verticaux et par conséquent il ne pourra plus effectuer de lecture des transistors d'état des cellules-mémoire du premier ensemble.

Le système peut former un système sur puce comprenant outre ledit même circuit intégré, des moyens d'encodage/décodage configurés pour utiliser le groupe de données de sortie en tant que clé de chiffrement/déchiffrement, des moyens de pilotage configurés pour délivrer audit même circuit intégré des signaux logiques de contrôle et des signaux analogiques de tension, ainsi qu'une autre mémoire non volatile.

Il convient de noter ici que dans ce cas, il n'y a aucun échange de données binaires entre le circuit intégré contenant le dispositif de fonction physiquement non clonable et cette autre mémoire non volatile.

Les seules données qui émanent du circuit intégré contenant le dispositif de fonction physiquement non clonable sont les données de sortie mais elles sont extrêmement difficiles voire impossibles à déterminer pour un attaquant car elles circulent de préférence sur un bus de plusieurs fils, par exemple 256 fils, en même temps et sur des niveaux de métaux différents.

Selon un autre aspect, il est proposé un procédé de génération automatique d'un code unique non prédictible à ladite interface de sortie d'un dispositif de fonction physiquement non clonable appartenant à un système tel que défini ci-avant, le procédé comprenant une mise sous tension du dispositif et une lecture de tensions de seuil effectives des transistors d'état desdites cellules-mémoire dudit premier ensemble, les grilles de commande des transistors d'état de ces cellules-mémoire étant connectées à la masse lors de ladite lecture.

Selon encore un autre aspect, il est proposé un procédé de réalisation d'un dispositif de fonction non clonable tel que défini ci-avant, comprenant une réalisation dudit dispositif au sein d'un circuit intégré et une génération et un stockage des informations de fiabilité par exemple lors d'une phase de test (connue par l'homme du métier sous l'acronyme anglosaxon «EWS») du circuit intégré.

D'autres avantages et caractéristiques de l'invention apparaîtront à l'examen de la description détaillée de modes de mise en œuvre et de réalisation de l'invention, nullement limitatifs, et des dessins annexés sur lesquels
[Fig 1]
[Fig 2]
[Fig 3]
[Fig 4]
[Fig 5]
[Fig 6]
[Fig 7]
[Fig 8]
[Fig 9]
[Fig 10]
[Fig 11]
[Fig 12]
[Fig 13]
[Fig 14]
[Fig 15] et
[Fig 16] illustrent schématiquement des modes de réalisation et de mise en œuvre de l'invention.

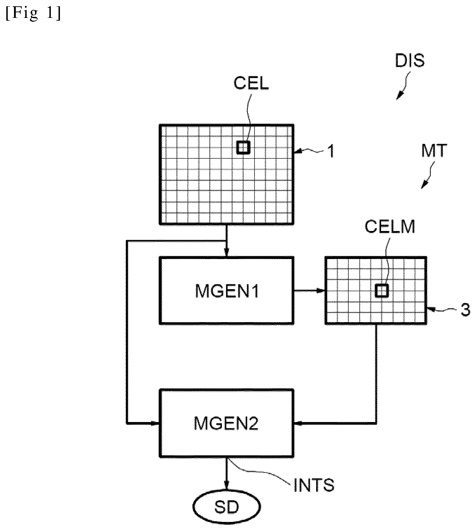

Sur la figure 1, la référence DIS désigne un dispositif de fonction physiquement non clonable.

Ce dispositif DIS comprend un premier ensemble 1 de cellules-mémoire non-volatiles CEL dont on reviendra plus en détails ci-après sur la structure.

Le dispositif DIS comporte également des moyens de traitement MT configurés pour délivrer à une interface de sortie INTS un groupe de données de sortie SD à partir d'une lecture des tensions de seuils effectives des transistors d'état des cellules-mémoire CEL du premier ensemble 1.

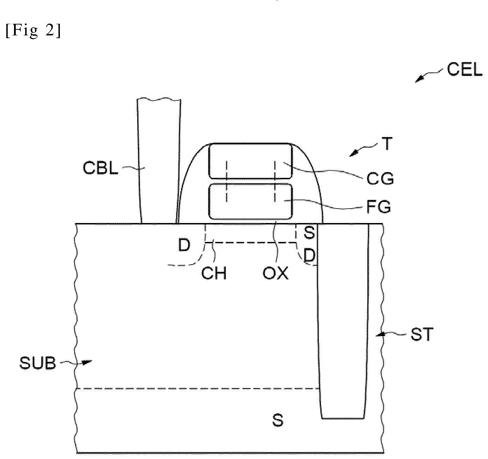

Avant de revenir plus en détails sur les autres éléments des moyens de traitement MT, on se réfère maintenant plus particulièrement à la figure 2 pour décrire la structure d'une cellule-mémoire non volatile CEL du premier ensemble.

La cellule CEL comporte un transistor d'état T ayant une grille de commande ou grille de contrôle CG et une grille flottante FG. Les deux grilles CG et FG sont ici électriquement connectées par exemple au moyen d'un via ou contact qui n'est pas situé dans le plan de la figure 2 mais qui est représenté schématiquement par deux traits pointillés.

La grille flottante FG est séparée du substrat semiconducteur SUB par un oxyde de grille OX dont l'épaisseur est avantageusement supérieure à 8 nanomètres par exemple compris entre 8 et 10 nanomètres.

Le drain D du transistor d'état T est connecté à une ligne de bits par l'intermédiaire d'un contact CBL.

La grille de commande CG du transistor T est quant à elle connectée à une ligne de contrôle de grille.

Le canal du transistor d'état à grille flottante, comportant une zone implantée en surface CH, est relié à une ligne de source SL par l'intermédiaire d'un transistor de sélection ST enterré dans le substrat SUB.

Le transistor ST possède une grille de sélection verticale enterrée dans le substrat, la ligne de source SL étant également enterrée.

Le drain D du transistor de sélection ST et la source S du transistor d'état T forment une région semiconductrice commune.

Comme indiqué ci-avant, le canal du transistor d'état T comporte un canal implanté en surface CH, par exemple dopé N, de façon que la cellule-mémoire correspondante fonctionne dans un mode d'appauvrissement.

En d'autres termes, le transistor d'état T étant du type à appauvrissement (« depletion » en langue anglaise), le caractère normalement passant (« normally on ») du transistor d'état lorsque la cellule-mémoire est dans un état vierge et qu'une tension nulle est appliquée sur la grille de commande est lié à la valeur de sa tension de seuil dans l'état vierge de la cellule-mémoire qui peut être choisie négative ou sensiblement nulle.

Dans le cas d'un canal de conductivité N, les dopants implantés peuvent être par exemple de l'arsenic As et la concentration de dopants détermine la tension de seuil du transistor T d'une cellule-mémoire à l'état vierge.

Le transistor d'état est ici configuré pour avoir une telle tension de seuil négative.

On pourra ajuster la dose de dopants implantés de façon à obtenir une tension de seuil théorique négative par exemple de l'ordre de -1 volts.

Tous les transistors d'état de toutes les cellules CEL du premier ensemble sont destinés à présenter la même tension de seuil.

Cela étant, les tensions de seuil effectives, c'est-à-dire les valeurs réelles des tensions de seuil, varient légèrement suivant une dispersion aléatoire, par exemple due à des aléas physiques de fabrication. Ce type de dispersion est habituel et connu en soi.

Les grilles de commande et flottante des transistors d'état étant électriquement reliées, les transistors d'état présentent par nature une variabilité face à ces aléas plus importante et donc une distribution plus large que d'autres types de composants électroniques, par exemple des transistors MOS ou des résistances.

Ainsi, les transistors T des cellules CEL du premier ensemble 1 présentent chacun une tension de seuil effective appartenant à une distribution aléatoire commune.

En particulier, la distribution aléatoire commune peut être une distribution de tensions de seuil de transistors de cellules-mémoires à l'état vierge n'ayant jamais été écrites.

Si l'on se réfère de nouveau à la figure 1, on voit que les moyens de traitement MT comportent un deuxième ensemble 3 de cellules-mémoire CELM possédant chacune également un transistor de sélection enterré dans un substrat semiconducteur et un transistor d'état ayant une grille de commande et une grille flottante.

En fait, les cellules-mémoire CELM sont analogues aux cellules-mémoire CEL à la différence près que les grilles flottantes et les grilles de commande des transistors d'état ne sont pas électriquement connectées. Chaque transistor d'état d'une cellule CELM est également avantageusement un transistor fonctionnant dans un mode d'appauvrissement.

De telles cellules-mémoire CELM sont par exemple du type de celles décrites plus en détails dans la demande de brevet US 2013/0 228 846 et présentent en plus par exemple un implant d'arsenic dans la région de canal comme décrit ci-avant pour une cellule-mémoire CEL du premier ensemble.

Comme on le verra plus en détail ci-après, ces cellules-mémoire CELM sont destinées à stocker des informations de fiabilité représentatives de la fiabilité ou de la non-fiabilité des contenus des cellules-mémoire CEL du premier ensemble.

Et, les moyens de traitement MT comportent des premiers moyens de génération MGEN1 configurés pour générer lesdites informations de fiabilité.

Les moyens de traitement MT comportent également des deuxièmes moyens de génération MGEN2 configurés pour générer le groupe de données de sortie SD au moins à partir de lectures des tensions de seuil effectives des transistors d'état des cellules-mémoire CEL et desdites informations de fiabilité contenues dans les cellules-mémoire CELM du deuxième ensemble 3.

On reviendra plus en détail sur un exemple de structure et de fonctionnement des premiers moyens de génération MGEN1, des deuxièmes moyens de génération MGEN2 et de l'agencement matriciel du deuxième ensemble de cellules 3.

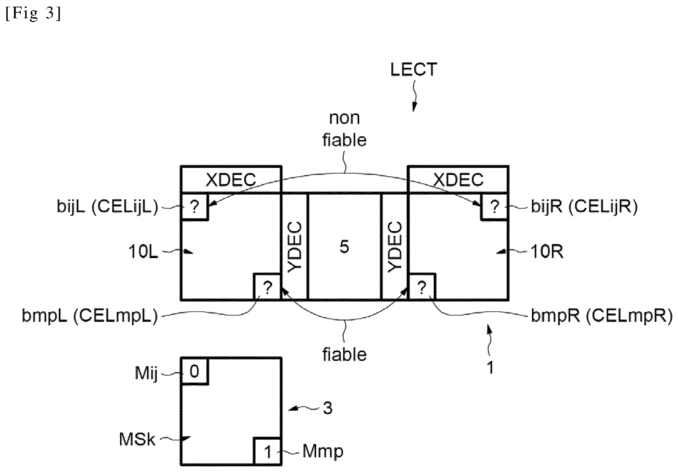

Si l'on se réfère maintenant plus particulièrement à la figure 3, on voit que dans ce mode de réalisation avantageux, le premier ensemble 1 de cellules-mémoire non volatiles CEL est organisé en deux premiers sous-ensembles matriciels 10L et 10R disposés symétriquement par rapport à des moyens de lecture LECT de structure classique et connue en soi, comportant typiquement des amplificateurs de lecture (« sense amplifiers ») 5.

Toutes les lignes ou rangées des deux premiers sous-ensembles matriciels 10L et 10R sont parallèles.

Le décodage ligne de chacun de ces deux sous-ensembles 10L, 10R est effectué par des décodeurs lignes XDEC de structure classique et connue en soi tandis que le décodage colonnes de ces deux premiers sous-ensembles est effectué par deux décodeurs colonnes YDEC, également de structure classique et connue en soi, disposés symétriquement par rapport aux amplificateurs de lecture 5.

Et, ces moyens de lecture LECT sont configurés pour effectuer des lectures différentielles des tensions de seuil effectives des transistors d'état des paires de cellules-mémoire symétriques CELijL et CELijR ou CELmpL et CELmpR et situées respectivement dans les deux premiers sous-ensembles 10L et 10R sur des colonnes homologues de ces deux premiers sous-ensembles.

Et, les cellules-mémoire du deuxième ensemble 3 sont destinées à contenir les informations de fiabilité représentatives de la fiabilité ou de la non fiabilité des contenus des paires de cellules-mémoire du premier ensemble.

Ces informations de fiabilité sont ici des données binaires ayant une première valeur logique, par exemple la valeur logique 0, représentative d'une non-fiabilité des contenus d'une paire de cellules-mémoire donnée du premier ensemble ou bien une deuxième valeur logique, par exemple la valeur logique 1, représentative d'une fiabilité des contenus d'une paire de cellules-mémoire donnée du premier ensemble.

Ainsi, à titre d'exemple, sur la figure 3, l'information de fiabilité Mij, ayant ici la valeur logique 0, est représentative de la non-fiabilité des contenus bijL et bijR de la paire de cellules-mémoire CELijL et CELijR du premier ensemble.

Par contre, l'information de fiabilité Mmp qui a la valeur logique 1, est ici représentative de la fiabilité des contenus bmpL et bmpR de la paire de cellules-mémoire CELmpL et CELmpR du premier ensemble.

L'ensemble de ces informations de fiabilité forme un masque MSK.

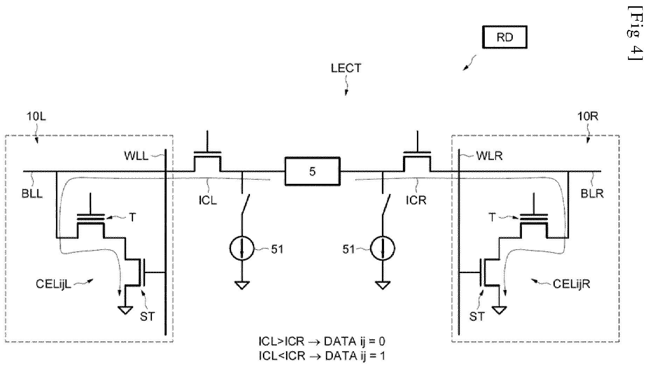

On se réfère maintenant plus particulièrement à la figure 4 pour décrire une lecture différentielle RD effectuée par des moyens de lecture LECT incorporant les amplificateurs de lecture 5.

Dans l'exemple illustré sur la figure 4, les moyens de lecture LECT sont configurés pour mesurer la différence entre les tensions de seuil effectives de la paire de transistors d'état T appartenant respectivement aux deux cellules-mémoire CELijL et CELijR.

Les moyens de lecture sont couplés aux transistors T via les lignes de bits respectives BLL et BLR.

Les transistors de sélection ST sont commandés sur leur grille par des signaux véhiculés sur les lignes de mots respectives WLL et WLR.

Outre les amplificateurs de lecture 5, les moyens de lecture comportent des générateurs de courant de référence 51 pouvant être connectés ou non aux amplificateurs de lecture 5 par l'intermédiaire d'interrupteurs.

Dans le cadre d'une lecture différentielle RD telle que celle illustrée sur la figure 4, avantageusement effectuée avec les grilles de commande des transistors d'état connectées à la masse, les générateurs de courant de référence ne sont pas connectés aux amplificateurs de lecture 5.

L'amplificateur de lecture 5 est configuré pour amplifier une différence entre le courant ICL écoulé dans la cellule CELijL et le courant ICR écoulé dans la cellule CELijR.

Ces courants de lecture ICL et ICR étant représentatifs des tensions de seuil effectives des transistors à grille flottante des cellules respectives CELijL et CELijR, la différence de ces courants est représentative de la différence entre les tensions de seuil effectives de ces transistors d'état.

Ainsi, les moyens de lecture LECT sont capables de mesurer la différence entre les tensions de seuil effectives des paires de transistors d'état de deux cellules disposées sur des lignes de bits homologues.

Et, à titre d'exemple non limitatif, on peut décider que si le courant ICL est supérieur au courant ICR, alors la donnée DATAij contenue dans cette paire de cellules a une valeur logique 0 tandis que si le courant ICL est inférieur au courant ICR, alors cette donnée a une valeur logique 1.

Bien entendu, on aurait pu adopter la conversion inverse.

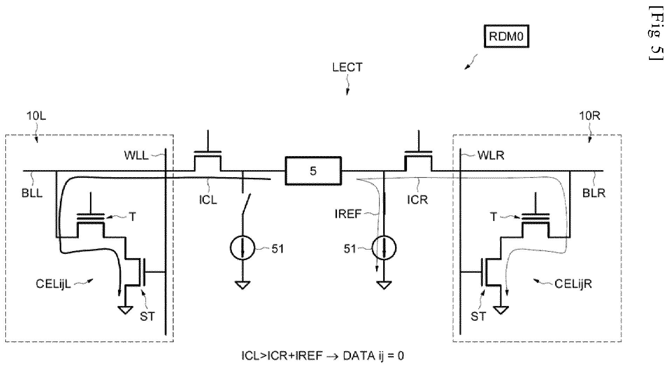

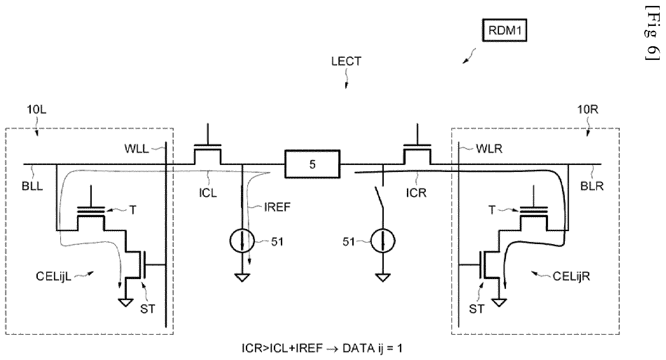

On se réfère maintenant plus particulièrement aux figures 5 et 6 pour décrire des lectures différentielles des tensions de seuil effectives des transistors d'état des paires de cellules-mémoire en prenant en compte une valeur de marge.

Là encore ces lectures différentielles sont avantageusement effectuées avec les grilles de commande des transistors d'état connectées à la masse.

La figure 5 illustre une première lecture différentielle RDMO prenant en compte une valeur de marge.

Plus précisément, lors de cette lecture RDMO, on ajoute le courant supplémentaire IREF généré par l'un des générateurs de courant 51, au courant écoulé par la cellule CELijR.

Ceci permet de mesurer une différence entre les tensions de seuil effectives à partir d'une certaine marge.

La valeur de la marge correspond au courant IREF représentatif d'un écart de tension de référence.

Cette valeur de marge est choisie notamment en fonction de la précision des moyens de lecture LECT.

A titre indicatif, la valeur du courant IREF peut être égale à 2 microampères.

Et, dans ce cas, si le courant ICL est supérieur à la somme du courant ICR et du courant IREF, alors la donnée stockée DATAij est prise égale par exemple à 0.

Sur la figure 6, on illustre une autre lecture différentielle RDM1, effectuée par les moyens de lecture LECT et prenant en compte la valeur de marge.

Plus précisément, dans ce cas, le courant de référence IREF est ajouté au courant ICL écoulé dans la cellule CELijL.

Et, par exemple, si le courant ICR est supérieur à la somme du courant ICL et du courant IREF, alors DATAij est égal à 1.

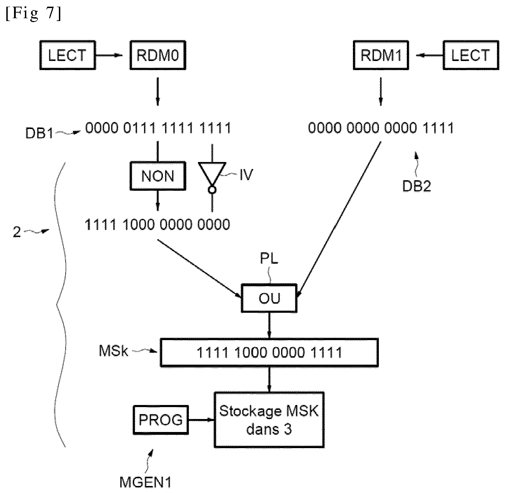

On se réfère maintenant plus particulièrement à la figure 7 pour décrire un exemple de structure des premiers moyens de génération MGEN1 permettant de générer les informations de fiabilité du masque MSK.

Comme illustré sur cette figure 7, les informations de fiabilité sont générées en prenant en compte une valeur de marge sur les lectures différentielles RDMO et RDM1 des tensions de seuil effectives des transistors d'état des paires de cellules-mémoire.

Plus précisément, les premiers moyens de génération MGEN1 comportent les moyens de lecture LECT configurés pour effectuer pour chaque paire de cellules-mémoire du premier ensemble 1 une première lecture, par exemple la lecture RDMO, de la différence entre d'une part le courant écoulé par une première cellule-mémoire de ladite paire augmenté du courant de référence représentatif de ladite valeur de marge et d'autre part le courant écoulé par la deuxième cellule-mémoire de ladite paire de façon à obtenir une première donnée binaire.

Les moyens de lecture LECT sont également configurés pour effectuer une deuxième lecture par exemple la lecture RDM1, de la différence entre d'une part le courant écoulé par la deuxième cellule-mémoire augmenté du courant de référence et d'autre part le courant écoulé par la première cellule-mémoire de façon à obtenir une deuxième donnée binaire.

Dans l'exemple décrit ici, on a représenté à des fins de simplification, un groupe de 16 premières données binaires DB1, par exemple [0000 0111 1111 1111], obtenues à l'issue de la première lecture RDMO et un groupe correspondant de 16 deuxièmes données binaires DB2, par exemple [0000 0000 0000 1111], obtenues à l'issue de la lecture RDM1.

Les moyens de génération MGEN1 comportent également un module, référencé globalement par la référence 2, configuré pour générer et écrire le masque MSK dans le deuxième ensemble 3 de cellules-mémoire.

Ce module 2 comporte un inverseur IV permettant d'inverser l'un des groupes de données binaires, par exemple le groupe de premières données binaires DB1 issu de la lecture RDMO, de façon à obtenir, dans le cas illustré, le groupe [1111 1000 0000 0000].

Puis, des moyens de comparaison, par exemple une porte OU référencée PL, permettent de comparer bit à bit le groupe de deuxièmes données binaires DB2 issues de la lecture RDM1 avec l'inverse du groupe de premières données binaires DB1 issues de la lecture RDMO.

Si un bit inversé a effectivement une valeur logique opposée à celle du bit correspondant non-inversé, alors on peut considérer que la donnée est fiable et affecter un 1 à l'information de fiabilité correspondante, ce qui est obtenu par la porte logique OU.

Par contre, si la valeur logique du bit inversé est égale à la valeur logique du bit non-inversé correspondant, alors la donnée est considérée comme non fiable et l'information de fiabilité correspondante aura la valeur logique 0.

On obtient donc un masque MSK comportant autant de bits qu'il y a de paires de cellules-mémoire dans le premier ensemble 1. Dans le cas illustré, le masque MSK est égal à [1111 1000 0000 1111].

Bien entendu il serait possible de remplacer l'inverseur et la porte OU par une porte logique du type OU EXCLUSIF (XOR).

Le module 2 comporte également des moyens d'écriture PROG, de structure classique et connue, permettant d'écrire les informations de fiabilité (bits) du masque MSK dans les cellules-mémoire correspondantes du deuxième ensemble 3.

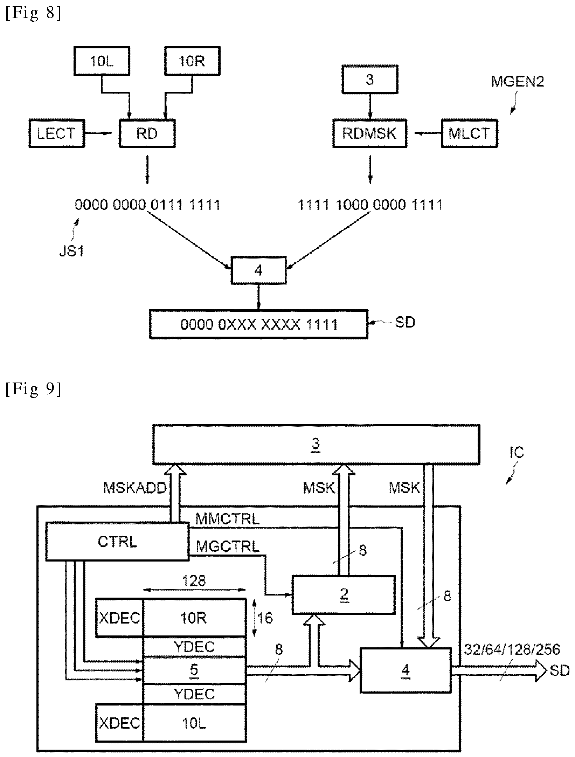

On se réfère maintenant plus particulièrement à la figure 8 pour décrire un exemple de structure des deuxièmes moyens de génération MGEN2 configurés pour générer le groupe de données de sortie SD à partir des lectures différentielles des tensions de seuil effectives des transistors d'état des paires de cellules-mémoire et des informations de fiabilité associées à ces paires de cellules-mémoire.

Plus précisément, les moyens de lecture LECT procèdent à une lecture différentielle RD classique des paires de cellules-mémoire homologues respectivement situées dans les deux sous-ensembles 10L et 10R de façon à obtenir un premier jeu de données de sortie JS1, par exemple [0000 0000 0111 1111], comportant dans cet exemple simplifié 16 données binaires de sortie.

Cette lecture est avantageusement effectuée avec les grilles de commande des transistors d'état connectées à la masse.

Des moyens de lecture classiques MLCT comportant également des amplificateurs de lecture tels que les amplificateurs de lecture 5, effectuent une lecture classique RDMSK des informations de fiabilité MSK correspondant aux paires de cellules lues et contenues dans les cellules-mémoire CELM du deuxième ensemble 3, par exemple [1111 1000 0000 1111].

Cette lecture RDMSK est également avantageusement effectuée avec les grilles de commande des transistors d'état connectées à la masse.

Les deuxièmes moyens de génération MGEN2 comportent alors des moyens de masquage 4 configurés pour ne conserver en tant que données de sortie SD que les données binaires du jeu JS1 qui sont affectées d'une information de fiabilité signifiant que la donnée est fiable, en l'espèce une information de fiabilité égale à 1.

Dans le cas présent, les données considérées comme fiables (valeur 1) sont les cinq premiers bits de gauche et les quatre derniers bits, les autres bits étant incertains (X).

Par conséquent, comme illustré sur la figure 8 à titre d'exemple, le jeu de données de sortie SD ne comportera que 9 bits sur les 16 du jeu JS1 [0000 0XXX XXXX 1111].

On se réfère maintenant plus particulièrement à la figure 9 qui illustre schématiquement un circuit intégré IC comportant différents moyens du dispositif de fonction physiquement non clonable décrit ci-avant.

Plus précisément, on retrouve ici les deux sous-ensembles 10L et 10R de cellules-mémoire comportant chacun 16 lignes et 128 colonnes.

Des décodeurs lignes XDEC sont affectés à chacun de ces deux sous-ensembles de même que des décodeurs colonnes YDEC répartis de part et d'autre des amplificateurs de lecture 5.

Un contrôleur CTRL commande le fonctionnement du module 2 de génération et de stockage du masque MSK ainsi que le fonctionnement des moyens de masquage 4 à l'aide de signaux de contrôle MGCTRL et MMCTRL.

Les données sont extraites des deux sous-ensembles 10R et 10L par exemple par bloc de 8 bits et le masque MSK est stocké dans le deuxième ensemble 3 de cellules par blocs de 8 bits sous le contrôle de signaux de contrôle MSKADD.

De même, les informations de fiabilité du masque sont extraites par blocs de 8 bits.

Les données de sortie SD peuvent être des données sur 32, 64, 128 ou 256 bits, au choix.

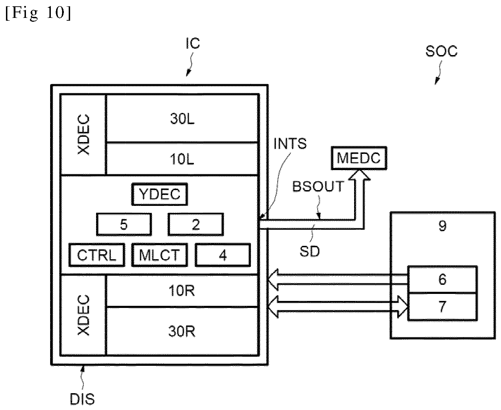

Bien que le mode de réalisation illustré sur la figure 9 soit envisageable, il s'avère particulièrement préférable de prévoir un mode de réalisation du type de celui illustré sur la figure 10.

Plus précisément selon ce mode de réalisation, le deuxième ensemble 3 de cellules-mémoire qui est destiné à stocker les informations de fiabilité, comporte deux deuxièmes sous-ensembles 30L et 30R respectivement répartis de part et d'autre des premiers sous-ensembles 10L et 10R.

Par ailleurs, les informations de fiabilité associées aux paires de cellules-mémoire sont stockées dans les cellules-mémoire du deuxième ensemble situées sur les mêmes colonnes que celles sur lesquelles sont situées lesdites paires correspondantes de cellules-mémoire.

Par ailleurs, le premier ensemble 1 de cellules-mémoire comportant les deux sous-ensembles 10L et 10R, le deuxième ensemble 3 de cellules-mémoire comportant les deux sous-ensembles 30L et 30R ainsi que les moyens de traitement MT sont situés au sein d'un même circuit intégré IC.

Ceci simplifie le décodage colonne et rend encore plus difficile une extraction des données par une attaque par exemple face arrière, du dispositif DIS.

En outre, il peut être avantageusement prévu que le circuit intégré IC incorporant le dispositif DIS soit situé sur un système sur puce SOC comportant en outre
- un bus BSOUT connecté sur l'interface de sortie INTS, de préférence réparti sur plusieurs niveaux de métal, et destiné à véhiculer les données de sortie SD,
- des moyens d'encodage/décodage MEDC configurés pour utiliser le groupe de données de sortie SD en tant que clé de chiffrement/déchiffrement,
- des moyens de pilotage 6 et 7, configurés pour délivrer au circuit intégré IC des signaux de logique de contrôle et des signaux analogiques de tension notamment, et
- une autre mémoire non volatile 9.

Et il convient de noter ici à cet égard qu'il n'y a aucune donnée échangée entre le plan-mémoire non volatile 10L, 10R, 30L et 30R et le plan-mémoire de la mémoire non volatile 9.

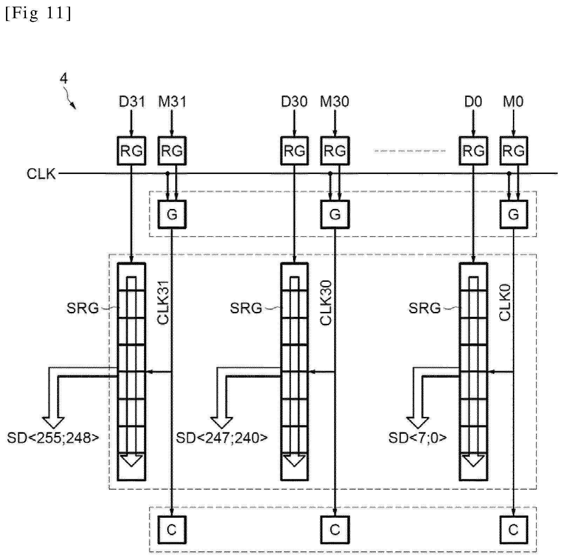

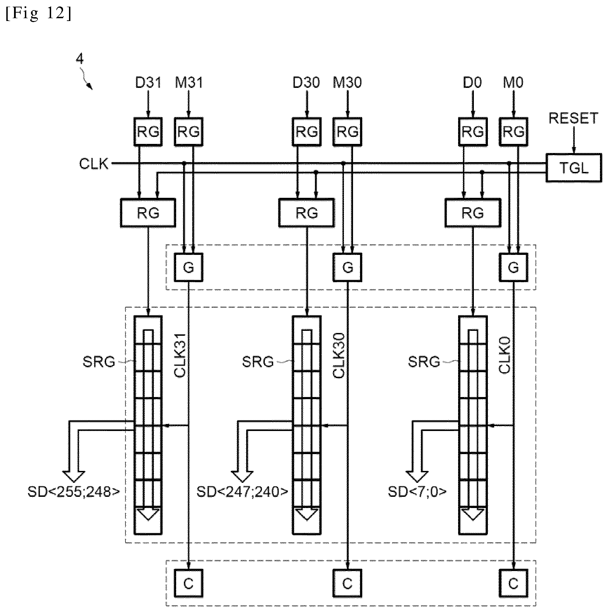

On se réfère maintenant plus particulièrement aux figures 11 et 12 pour illustrer des modes de réalisation possibles des moyens de masquage 4.

Sur la figure 11, on voit que les moyens de masquage comportent des registres RG destinés à contenir les données D et informations de fiabilité M respectivement extraites des premier et deuxième ensembles de cellules-mémoires.

Dans l'exemple décrit ici, 32 paires de registres sont prévues pour stocker en parallèle 32 données D extraites du premier ensemble de cellules-mémoires et 32 informations de fiabilité M extraites du deuxième ensemble de cellules-mémoires.

Par ailleurs, un circuit logique G, par exemple une porte ET, est associé à chaque registre RG destiné à stocker une information de fiabilité M et est destiné à effectuer une coupure ou non d'un signal d'horloge CLK (« clock gating »).

Plus précisément, si l'information de fiabilité a la valeur 0, ce qui correspond à une non fiabilité de la donnée correspondante D, alors le signal d'horloge n'est pas transmis en sortie de la porte G.

Par contre, si l'information de fiabilité M a la valeur 1, ce qui est représentatif d'une fiabilité de la donnée D correspondante, alors le signal d'horloge CLK est effectivement transmis en sortie de la porte G.

Les moyens de masquage 4 comportent également ici 32 registres à décalage SRG destinés à recevoir chacun des données D, au rythme du signal d'horloge correspondant CLK31-CLK0 délivré par la porte G correspondante.

En d'autres termes, lorsque le signal d'horloge correspondant est effectivement délivré en sortie de la porte G, la donnée D correspondante peut être stockée dans le registre à décalage.

Et, à chaque fois que le signal d'horloge CLK est délivré en sortie de la porte G, on a un décalage des données et un stockage d'une nouvelle donnée dans le registre à décalage SRG.

Il est également prévu ici 32 compteurs C ayant une capacité de comptage de 8.

Ces compteurs sont incrémentés à chaque front du signal d'horloge correspondant lorsque celui-ci est délivré par la porte G correspondante.

Et, lorsque le compteur C a atteint sa valeur de comptage maximale, cela signifie que le registre à décalage SRG correspondant est plein et par conséquent les huit données qu'il contient peuvent être extraites.

Bien que le mode de réalisation illustré sur la figure 11 soit tout à fait envisageable, il peut être préférable d'utiliser le mode de réalisation de la figure 12 pour le module de génération 4.

Alors que dans le mode de réalisation de la figure 11, les données de sortie étaient obtenues à partir des données D extraites des deux sous-ensembles 10L et 10R, et des informations de fiabilité M, ces données de sortie sont cette fois-ci obtenues dans le mode de réalisation de la figure 12, également à partir de la valeur logique du bit de poids faible de l'adresse de la colonne dans laquelle se situe la donnée D extraite, c'est-à-dire la paire correspondante de cellules-mémoires CELij du premier ensemble 1.

Plus précisément, le mode de réalisation de la figure 12 diffère de celui de la figure 11 par l'adjonction d'un moyen logique TGL, cadencé par le signal d'horloge CLK et délivrant ce bit de poids faible de l'adresse de colonnes.

En outre, des portes logiques G du type OU EXCLUSIF ou XOR, reçoivent d'une part ce bit de poids faible d'adresse et d'autre part la donnée D correspondante.

Ces portes XOR permettent ainsi d'inverser ou non la valeur logique de la donnée D extraite en fonction de la valeur logique du bit de poids faible de l'adresse colonne.

On obtient ainsi un caractère aléatoire amélioré pour les données de sortie SD.

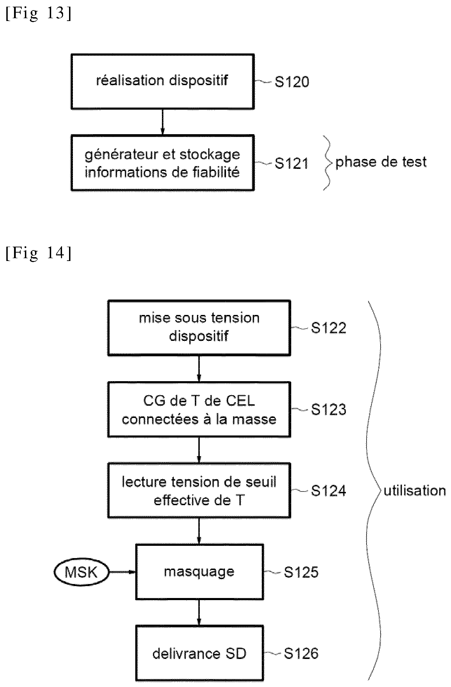

Comme illustré très schématiquement sur la figure 13, après réalisation du dispositif DIS (étape S120) au sein du circuit intégré, on procède à la génération et au stockage des informations de fiabilité (étape S121) avant l'utilisation proprement dite du dispositif, par exemple lors de la phase de test du circuit intégré (connu par l'homme du métier sous l'acronyme anglosaxon EWS : Electrical Wafer Sorting).

En ce qui concerne la génération automatique du code unique non prédictible SD à l'interface de sortie INTS du dispositif, celle-ci s'effectue lors de l'utilisation proprement dite du dispositif (figure 14).

Elle comporte une mise sous tension du dispositif (étape S122).

Les grilles de commande des transistors d'état T des cellules CEL du premier ensemble 1 sont connectées à la masse (étape S123).

On procède ensuite à la lecture des tensions de seuil effectives des transistors d'état des paires de cellules (étape S124).

Puis, on procède dans l'étape S125 au masquage de ces données par le masque MSK de façon à ne délivrer que les données fiables SD dans l'étape S126.

L'invention n'est pas limitée aux modes de mise en œuvre et de réalisation qui viennent d'être décrits mais en embrasse toutes les variantes.

Ainsi, sur les figures 11 et 12 on pourrait par exemple remplacer les compteurs C par des mémoires-verrous rebouclées par l'intermédiaire d'une porte ET.

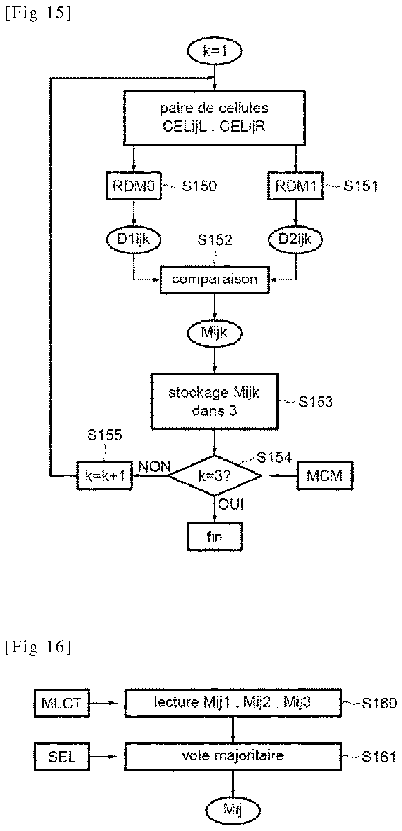

En outre, comme illustré schématiquement sur les figures 15 et 16, il est possible pour les premiers moyens de génération MGEN1 :
- de déterminer et de stocker pour chaque donnée un nombre impair d'informations de fiabilité qui sont alors considérées comme des informations de fiabilité provisoires, puis
- d'effectuer un vote majoritaire sur ces informations de fiabilité provisoires afin de déterminer l'information de fiabilité qui va être utilisée pour déterminer si la donnée est fiable ou non fiable.

Plus précisément, sur la figure 15, pour chaque paire de cellules CELijL et CELijR, les moyens de lecture LECT effectuent dans les étapes S150 et S151 les lectures différentielles RDMO et RDM1 décrites en référence aux figures 5 et 6 de façon à extraire une première donnée binaire D1ijk (k=1) et une deuxième donnée binaire D2ijk (k=1).

Puis, comme expliqué ci-avant, les moyens de comparaison PL (porte OU) procède à la comparaison S152 de ces deux données binaires (dont l'une est inversée) de façon à en extraire une première information de fiabilité provisoire Mijk (k=1).

Les moyens d'écriture PROG stockent ensuite cette information de fiabilité provisoire Mijk (étape 153) dans trois cellules-mémoires correspondantes du deuxième ensemble 3.

Puis, des moyens de commande MCM commandent une répétition les étapes S150 à S153 de façon à obtenir un nombre impair k d'informations de fiabilité provisoires (étapes S154 et S155).

Dans l'exemple décrit ici k est égal à 3.

On obtient donc *in fine* trois informations de fiabilité provisoire Mij1, Mij2 et Mij3.

Puis, comme illustré sur la figure 16, lors de la génération des données de sortie SD, les moyens de lecture MLCT lisent pour la donnée extraite d'une paire de cellules, les trois informations de fiabilité provisoire (étape S160) et des moyens de sélection SEL effectuent un vote majoritaire (étape S161) sur les valeurs logiques de ces trois informations de fiabilité pour en déduire l'information de fiabilité associée à cette donnée, dont la valeur logique est la valeur logique majoritaire.

## Revendications

1. Système comprenant un dispositif de fonction physiquement non clonable (DIS), ledit dispositif (DIS) comprenant :
- un premier ensemble (1) de cellules-mémoires non volatiles (CEL) possédant chacune un transistor de sélection (ST) enterré dans un substrat semi-conducteur et possédant une grille de sélection verticale enterrée dans le substrat, et un transistor d'état (T) du type à appauvrissement ayant une grille de commande (CG) et une grille flottante (FG) électriquement connectées, les transistors d'état (T) ayant des tensions de seuils effectives respectives appartenant à une distribution aléatoire commune, et
- des moyens de traitement (MT) configurés pour délivrer à une interface de sortie (INTS) du dispositif, un groupe de données de sortie (SD) à partir d'une lecture des tensions de seuil effectives des transistors d'état des cellules-mémoires dudit premier ensemble.

2. Système selon la revendication 1, dans lequel chaque cellule-mémoire (CEL) comporte un oxyde de grille (OX) disposé entre la grille flottante du transistor d'état et le substrat, l'épaisseur de cet oxyde de grille étant supérieure à 8 nanomètres.

3. Système selon l'une des revendications précédentes, dans lequel
- les moyens de traitement (MT) comportent des moyens de lecture (LECT) configurés pour effectuer ladite lecture,
- le premier ensemble (1) de cellules-mémoires non volatiles est organisé en deux premiers sous-ensembles matriciels (10L ; 10R) disposés symétriquement par rapport aux moyens de lecture, toutes les lignes des deux premiers sous-ensembles matriciels étant parallèles, et
- les moyens de lecture (LECT) sont configurés pour effectuer ladite lecture comportant des lectures différentielles des tensions de seuil effectives des transistors d'état des paires de cellules-mémoires symétriques et situées respectivement dans les deux premiers sous-ensembles sur des colonnes homologues de ces deux premiers sous-ensembles.

4. Système selon la revendication 3, dans lequel les moyens de traitement (MT) comportent un deuxième ensemble (3) de cellules-mémoires (CELM) possédant chacune un transistor de sélection enterré dans un substrat semi-conducteur et un transistor d'état, de préférence du type à appauvrissement, ayant une grille de commande et une grille flottante, les cellules-mémoires du deuxième ensemble étant destinées à contenir des informations de fiabilité (MSK) représentatives de la fiabilité ou de la non fiabilité des contenus des paires de cellules-mémoires du premier ensemble.

5. Système selon la revendication 4, dans lequel le deuxième ensemble (3) comporte un agencement matriciel de cellules-mémoires partageant les mêmes colonnes que celles de l'agencement matriciel de cellules-mémoires du premier ensemble (1).

6. Système selon la revendication 5, dans lequel le deuxième ensemble (3) comporte deux deuxièmes sous-ensembles (30L ; 30R) respectivement répartis de part et d'autre des premiers sous-ensembles (10L ; 10R).

7. Système selon la revendication 5 ou 6, dans lequel les informations de fiabilité associées aux paires de cellules-mémoires sont stockées dans des cellules-mémoires du deuxième ensemble (3) situées sur les mêmes colonnes que celles sur lesquelles sont situées lesdites paires correspondantes de cellules-mémoires.

8. Système selon l'une des revendications précédentes prise en combinaison avec la revendication 4, dans lequel les moyens de traitement (MT) comportent des premiers moyens de génération (MGEN1) configurés pour générer lesdites informations de fiabilité en prenant en compte une valeur de marge sur les lectures différentielles des tensions de seuil effectives des transistors d'état des paires de cellules-mémoires.

9. Système selon la revendication 8, dans lequel les premiers moyens de génération (MGEN1) comprennent
- les moyens de lecture (LECT) configurés pour effectuer en outre, pour chaque paire de cellules-mémoires du premier ensemble,
une première lecture (RDMO) de la différence entre d'une part le courant écoulé par une première cellule-mémoire de ladite paire augmenté d'un courant de référence représentatif de ladite valeur de marge et d'autre part le courant écoulé par la deuxième cellule-mémoire de ladite paire, de façon à obtenir une première donnée binaire,
une deuxième lecture (RDM1) de la différence entre d'une part le courant écoulé par la deuxième cellule-mémoire augmenté dudit courant de référence et d'autre part le courant écoulé par la première cellule, de façon à obtenir une deuxième donnée binaire,
- des moyens de comparaison (PL) configurés pour comparer l'une des première et deuxième données binaires avec l'inverse de l'autre des première et deuxième données binaires, et pour délivrer ladite information de fiabilité associée à ladite paire de cellules-mémoires, dont la valeur logique dépend du résultat de la comparaison, et
- des moyens d'écriture (PROG) pour écrire ladite information de fiabilité dans la cellule-mémoire correspondante du deuxième ensemble.

10. Système selon la revendication 8, dans lequel les premiers moyens de génération (MGEN1) comprennent
- les moyens de lecture configurés pour effectuer, pour chaque paire de cellules-mémoires du premier ensemble,
a)une première lecture de la différence entre d'une part le courant écoulé par une première cellule-mémoire de ladite paire augmenté d'un courant de référence représentatif de ladite valeur de marge et d'autre part le courant écoulé par la deuxième cellule-mémoire de ladite paire, de façon à obtenir une première donnée binaire,
b)une deuxième lecture de la différence entre le courant écoulé par la deuxième cellule-mémoire augmenté du courant de référence et d'autre part le courant écoulé par la première cellule, de façon à obtenir une deuxième donnée binaire,
- des moyens de comparaison configurés pour
c)comparer l'une des première et deuxième données binaires avec l'inverse de l'autre des première et deuxième données binaires, et
d)délivrer une information de fiabilité provisoire associée à ladite paire de cellules-mémoires, dont la valeur logique dépend du résultat de la comparaison,
- des moyens d'écriture configurés pour
e)écrire ladite information de fiabilité provisoire dans la cellule-mémoire correspondante du deuxième ensemble, et
- des moyens de commande configurés pour faire exécuter, un nombre impair de fois, aux moyens de lecture, de comparaison et d'écriture les étapes a), b), c), d) et e) de façon à obtenir un nombre impair d'information de fiabilité provisoires stockées, et
- des moyens de sélection configurés pour effectuer un vote majoritaire sur les valeurs logiques des informations de fiabilité provisoires, de façon à sélectionner ladite information de fiabilité.

11. Système selon l'une des revendications précédentes prise en combinaison avec la revendication 4, dans lequel les moyens de traitement (MT) comprennent des deuxièmes moyens de génération (MGEN2) configurés pour générer ledit groupe de données de sortie au moins à partir des lectures différentielles des tensions de seuil effectives des transistors d'état des paires de cellules-mémoires, et desdites informations de fiabilité de ces paires de cellules-mémoires.

12. Système selon la revendication 11, dans lequel les deuxièmes moyens de génération (MGEN2) sont configurés pour générer ledit groupe de données de sortie à partir des lectures différentielles des tensions de seuil effectives des transistors d'état des paires de cellules-mémoires, des adresses des colonnes dans lesquelles se situent lesdites paires de cellules-mémoires et desdites informations de fiabilité de ces paires de cellules-mémoires.

13. Système selon la revendication 12, dans lequel les deuxièmes moyens de génération (MGEN2) comportent
- lesdits moyens de lecture (LECT) configurés pour effectuer pour chaque paire de cellules-mémoires, ladite lecture différentielle de façon à obtenir une première information binaire ayant une première valeur logique,
- des moyens d'inversion configurés pour inverser ou non ladite première valeur logique en fonction de la valeur logique du bit de poids faible de l'adresse de la colonne dans laquelle se situe ladite paire et délivrer une deuxième information binaire ayant une deuxième valeur logique, et
- des moyens de masquage (4) configurés pour ne conserver la deuxième information binaire en tant que donnée de sortie, uniquement si ladite paire de cellules-mémoires est associée à une information de fiabilité la désignant comme fiable.

14. Système selon l'une des revendications précédentes prise en combinaison avec la revendication 4, dans lequel le premier ensemble (1) de cellules-mémoires, le deuxième ensemble (3) de cellules-mémoires et les moyens de traitement (MT) sont situés au sein d'un même circuit intégré (IC).

15. Système selon la revendication 14, formant un système sur puce (SOC) comprenant outre ledit même circuit intégré (IC), des moyens d'encodage/décodage (MEDC) configurés pour utiliser le groupe de données de sortie en tant que clé de chiffrement/déchiffrement, des moyens de pilotage (6, 7) configurés pour délivrer audit même circuit intégré des signaux de logiques de contrôle et des signaux analogiques de tensions, ainsi qu'une autre mémoire non volatile (9).

16. Procédé de génération automatique d'un code unique non prédictible à ladite interface de sortie d'un dispositif de fonction physiquement non clonable appartenant à un système selon l'une des revendications 1 à 15, comprenant une mise sous tension (S122) du dispositif (DIS) et une lecture (S124) des tensions de seuil effectives des transistors d'état des cellules-mémoires dudit premier ensemble, les grilles de commande des transistors d'état de ces cellules-mémoires étant connectées à la masse lors de ladite lecture.

17. Procédé de réalisation d'un dispositif de fonction physiquement non clonable (DIS) appartenant au système selon la revendication 4 ou 14, comprenant une réalisation (S120) du dispositif au sein d'un circuit intégré et une génération et un stockage (S121) des informations de fiabilité lors d'une phase de test du circuit intégré.

## Patentansprüche

1. System, das eine physisch nicht klonbare Funktionsvorrichtung (DIS) umfasst, wobei die Vorrichtung (DIS) umfasst:
- eine erste Einheit (1) an nichtflüchtigen Speicherzellen (CEL), die jeweils einen Auswahltransistor (ST), der in einem Halbleitersubstrat eingebettet ist und ein im Substrat eingebettetes vertikales Auswahl-Gate besitzt, und einen Zustandstransistor (T) vom Verarmungstyp, der ein elektrisch verbundenes Steuer-Gate (CG) und ein floating Gate (FG), die elektrisch verbunden sind, besitzen, wobei die Zustandstransistoren (T) jeweils effektive Schwellenspannungen aufweisen, die einer gemeinsamen Zufallsverteilung angehören, und
- Verarbeitungsmittel (MT), die konfiguriert sind, um einer Ausgangsschnittstelle (INTS) der Vorrichtung eine Ausgangsdatengruppe (SD) ausgehend von einem Ablesen der effektiven Schwellenspannungen der Zustandstransistoren der Speicherzellen der ersten Einheit abzugeben.

2. System nach Anspruch 1, wobei jede Speicherzelle (CEL) ein Gate-Oxid (OX) aufweist, das zwischen dem floating Gate des Zustandstransistors und dem Substrat angeordnet ist, wobei die Dicke dieses Gate-Oxids mehr als 8 Nanometer beträgt.

3. System nach einem der vorstehenden Ansprüche, wobei
- die Verarbeitungsmittel (MT) Ablesemittel (LECT) aufweisen, die konfiguriert sind, um das Ablesen durchzuführen,
- die erste Einheit (1) an nichtflüchtigen Speicherzellen in zwei ersten Matrix-Untereinheiten (10L; 10R) angeordnet ist, die in Bezug zu den Ablesemitteln symmetrisch angeordnet sind, wobei alle Zeilen der beiden ersten Matrix-Untereinheiten parallel sind, und
- die Ablesemittel (LECT) konfiguriert sind, um das Ablesen durchzuführen, das Differenzablesungen der effektiven Schwellenspannungen der Zustandstransistoren der symmetrischen und sich jeweils in den ersten beiden Untereinheiten befindlichen Zellen-Speicherpaare an homologen Spalten dieser ersten beiden Untereinheiten aufweist.

4. System nach Anspruch 3, wobei die Verarbeitungsmittel (MT) eine zweite Einheit (3) an Speicherzellen (CELM) aufweisen, die jeweils einen Auswahltransistor, der in einem Halbleitersubstrat eingebettet ist, und einen Zustandstransistor, vorzugsweise vom Verarmungstyp besitzen, der ein Steuer-Gate und ein floating Gate aufweist, wobei die Speicherzellen der zweiten Einheit dazu bestimmt sind, Zuverlässigkeitsinformationen (MSK) zu enthalten, die repräsentativ für die Zuverlässigkeit oder Unzuverlässigkeit der Inhalte der Speicherzellenpaare der ersten Einheit sind.

5. System nach Anspruch 4, wobei die zweite Einheit (3) eine Matrixanordnung von Speicherzellen aufweist, die dieselben Spalten wie die der Matrixanordnung von Speicherzellen der ersten Einheit (1) teilen.

6. System nach Anspruch 5, wobei die zweite Einheit (3) zwei zweite Untereinheiten (30L; 30R) aufweist, die jeweils auf beiden Seiten der ersten Untereinheiten (10L; 10R) verteilt sind.

7. System nach Anspruch 5 oder 6, wobei die den Speicherzellenpaaren zugeordneten Zuverlässigkeitsinformationen in Speicherzellen der zweiten Einheit (3) gespeichert sind, die sich in denselben Spalten befinden, in denen sich die entsprechenden Speicherzellenpaare befinden.

8. System nach einem der vorstehenden Ansprüche in Kombination mit Anspruch 4, wobei die Verarbeitungsmittel (MT) erste Erzeugungsmittel (MGEN1) aufweisen, die konfiguriert sind, um die Zuverlässigkeitsinformationen unter Berücksichtigung eines Margenwerts auf den Differenzablesungen der effektiven Schwellenspannungen der Zustandstransistoren der Speicherzellenpaare zu erzeugen.

9. System nach Anspruch 8, wobei die ersten Erzeugungsmittel (MGEN1) umfassen
- die Lesemittel (LECT), die konfiguriert sind, um weiter für jedes Speicherzellenpaar der ersten Einheit durchzuführen
ein erstes Ablesen (RDM0) der Differenz zwischen einerseits dem Strom, der durch eine erste Speicherzelle des Paares, erhöht um einen Referenzstrom geflossen ist, der repräsentativ für den Margenwert ist, und andererseits dem Strom, der durch die zweite Speicherzelle des Paares gelaufen ist, um ein erstes binäres Datenelement zu erhalten,
ein zweites Ablesen (RDM1) der Differenz zwischen einerseits dem Strom, der durch die zweite Speicherzelle, erhöht um den Referenzstrom geflossen ist, und andererseits dem Strom, der von der ersten Zelle gelaufenen, um ein zweites binäres Datenelement zu erhalten,
- Vergleichsmittel (PL), die konfiguriert sind, um eines der ersten und zweiten binären Daten mit dem Gegenteil des anderen der ersten und zweiten binären Daten zu vergleichen und die dem Speicherzellenpaar zugeordneten Zuverlässigkeitsinformationen abzugeben, deren logischer Wert vom Ergebnis des Vergleichs abhängt, und
- Schreibmittel (PROG), zum Schreiben der Zuverlässigkeitsinformation in die entsprechende Speicherzelle der zweiten Einheit.

10. System nach Anspruch 8, wobei die ersten Erzeugungsmittel (MGEN1) umfassen
- die Ablesemittel, die konfiguriert sind, um für jedes Speicherzellenpaar der ersten Einheit durchzuführen
a)ein erstes Ablesen der Differenz zwischen einerseits dem Strom, der durch eine erste Speicherzelle des Paares, erhöht um einen Referenzstrom geflossen ist, der repräsentativ für den Margenwert ist, und andererseits dem Strom, der durch die zweite Speicherzelle des Paares geflossen ist, um ein erstes binäres Datenelement zu erhalten,
b)ein zweites Ablesen der Differenz zwischen dem Strom, der von der zweiten Speicherzelle, erhöht um den Referenzstrom geflossen ist, und andererseits dem Strom, der von der ersten Zelle geflossen ist, um ein zweites binäres Datenelement zu erhalten,
- Vergleichsmittel, die konfiguriert sind, um
c)eines der ersten und zweiten Binärdaten mit dem Gegenteil der anderen der ersten und zweiten Binärdaten zu vergleichen, und
d)eine vorläufige Zuverlässigkeitsinformation bereitzustellen, die dem Speicherzellenpaar zugeordnet ist, deren logischer Wert vom Ergebnis des Vergleichs abhängt,
- Schreibmittel, die konfiguriert sind, um
e)die vorläufige Zuverlässigkeitsinformation in die entsprechende Speicherzelle der zweiten Einheit zu schreiben, und
- Steuermittel, die konfiguriert sind, um die Schritte a), b), c), d) und e) eine ungerade Anzahl an Malen von den Ablese-, Vergleichs- und Schreibmitteln ausführen zu lassen, um eine ungerade Anzahl an gespeicherten vorläufigen Zuverlässigkeitsinformationen zu erhalten, und
- Auswahlmittel, die konfiguriert sind, um eine Mehrheitsabstimmung über die logischen Werte der vorläufigen Zuverlässigkeitsinformationen durchführen, um die Zuverlässigkeitsinformation auszuwählen.

11. System nach einem der vorstehenden Ansprüche in Kombination mit Anspruch 4, wobei die Verarbeitungsmittel (MT) zweite Erzeugungsmittel (MGEN2) umfassen, die konfiguriert sind, um die Einheit von Ausgangsdaten mindestens aus den Differenzablesungen der effektiven Schwellenspannungen der Zustandstransistoren der Speicherzellpaare und den Zuverlässigkeitsinformationen dieser Speicherzellpaare zu erzeugen.

12. System nach Anspruch 11, wobei die zweiten Erzeugungsmittel (MGEN2) konfiguriert sind, um die Einheit von Ausgangsdaten aus den Differenzablesungen der effektiven Schwellenspannungen der Zustandstransistoren der Speicherzellpaare, den Adressen der Spalten, in denen sich die Speicherzellpaare befinden, und den Zuverlässigkeitsinformationen dieser Speicherzellpaare zu erzeugen.

13. System nach Anspruch 12, wobei die zweiten Erzeugungsmittel (MGEN2) aufweisen
- die Ablesemittel (LECT), die konfiguriert sind, um für jedes Speicherzellenpaar das differenzielle Ablesen durchzuführen, um eine erste binäre Information zu erhalten, die einem ersten logischen Wert aufweist,
- Umkehrmittel, die konfiguriert sind, um den ersten logischen Wert in Abhängigkeit vom logischen Wert des niedriggewichtigen Bits der Adresse der Spalte, in der sich das Paar befindet, umzukehren oder nicht umzukehren und eine zweite binäre Information abzugeben, die einen zweiten logischen Wert aufweist, und
- Verschleierungsmittel (4), die konfiguriert sind, um die zweite binäre Information nur dann als Ausgangsgröße zu behalten, wenn das Speicherzellenpaar einer Zuverlässigkeitsinformation zugeordnet ist, die sie als zuverlässig bezeichnet.

14. System nach einem der vorstehenden Ansprüche in Kombination mit Anspruch 4, wobei sich die erste Einheit (1) von Speicherzellen, die zweite Einheit (3) von Speicherzellen und die Verarbeitungsmittel (MT) innerhalb einer gleichen integrierten Schaltung (IC) befinden.

15. System nach Anspruch 14, das ein System auf einem Chip (SOC) bildet, das neben dem gleichen integrierten Schaltkreis (IC) auch Codier-/Decodiermittel (MEDC) umfasst, die konfiguriert sind, um die Einheit von Ausgangsdaten als Verschlüsselungs-/Entschlüsselungsschlüssel verwenden, Ansteuermittel (6, 7), die konfiguriert sind, um dem gleichen integrierten Schaltkreis Steuerlogiksignale und analoge Spannungssignale, sowie einen anderen nichtflüchtigen Speicher (9) abzugeben.

16. Verfahren zum automatischen Erzeugen eines eindeutigen, nicht vorhersagbaren Codes an der Ausgangsschnittstelle einer physisch nicht klonbaren Funktionsvorrichtung, die einem System nach einem der Ansprüche 1 bis 15 angehört, umfassend ein Einschalten (S122) der Vorrichtung (DIS) und ein Ablesen (S124) der effektiven Schwellenspannungen der Zustandstransistoren der Speicherzellen der ersten Einheit, wobei die Steuer-Gates der Zustandstransistoren dieser Speicherzellen beim Ablesen mit der Masse verbunden sind.

17. Verfahren zum Erzeugen einer physisch nicht klonbaren Funktionsvorrichtung (DIS), die dem System nach Anspruch 4 oder 14 angehört, umfassend eine Ausführung (S120) der Vorrichtung innerhalb einer integrierten Schaltung und ein Erzeugen und Speichern (S121) der Zuverlässigkeitsinformationen während einer Testphase der integrierten Schaltung.

## Claims

1. System comprising a physically unclonable function device (DIS), said device (DIS) comprising:
- a first assembly (1) of non-volatile memory cells (CELs) each having a selection transistor (ST) buried in a semiconductor substrate and having a vertical selection gate buried in the substrate, and a state transistor (T) of the depleting type having a control gate (CG) and a floating gate (FG) that are electrically connected, the state transistors (T) having respective effective threshold voltages belonging to a common random distribution, and
- processing means (MT) configured to deliver to an output interface (INTS) of the device, a group of output data (SD) based on a reading of the effective threshold voltages of the state transistors of the memory cells of said first assembly.

2. System according to claim 1, wherein each memory cell (CEL) comprises a gate oxide (OX) disposed between the floating gate of the state transistor and the substrate, the thickness of this gate oxide being greater than 8 nanometres.

3. System according to one of the preceding claims, wherein
- the processing means (MT) comprise reading means (LECT) configured to carry out said reading,
- the first assembly (1) of non-volatile memory cells is organised into two first matrix sub-assemblies (10L; 10R) arranged symmetrically with respect to the reading means, all rows of the first two matrix sub-assemblies being parallel, and
- the reading means (LECT) are configured to carry out said reading comprising differential readings of the effective threshold voltages of the state transistors of the symmetrical pairs of memory cells and located respectively in the first two sub-assemblies on homologous columns of these first two sub-assemblies.

4. System according to claim 3, wherein the processing means (MT) comprise a second assembly (3) of memory cells (CELM) each having a selection transistor buried in a semiconductor substrate and a state transistor, preferably of the depleting type, having a control gate and a floating gate, the memory cells of the second assembly being intended to contain reliability information (MSK) representative of the reliability or unreliability of the contents of the pairs of memory cells of the first assembly.

5. System according to claim 4, wherein the second assembly (3) comprises a matrix arrangement of memory cells sharing the same columns as those of the matrix arrangement of memory cells of the first assembly (1).

6. System according to claim 5, wherein the second assembly (3) comprises two second sub-assemblies (30L; 30R) respectively distributed on either side of the first sub-assemblies (10L; 10R).

7. System according to claim 5 or 6, wherein the reliability information associated with the pairs of memory cells is stored in memory cells of the second assembly (3) located on the same columns as those on which said corresponding pairs of memory cells are located.

8. System according to one of the preceding claims taken in combination with claim 4, wherein the processing means (MT) comprise first generation means (MGEN1) configured to generate said reliability information by taking into account a margin value on the differential readings of the effective threshold voltages of the state transistors of the pairs of memory cells.

9. System according to claim 8, wherein the first generation means (MLB1) comprise
- the reading means (LECT) configured to further carry out, for each pair of memory cells of the first assembly,
a first reading (RDM0) of the difference between, on the one hand, the current flowing by a first memory cell of said pair increased by a reference current representative of said margin value and, on the other hand, the current flowing by the second memory cell of said pair, so as to obtain a first binary data,
a second reading (RDM1) of the difference between, on the one hand, the current flowing by the second memory cell increased by said reference current and, on the other hand, the current flowing by the first cell, so as to obtain a second binary data item,
- comparison means (PL) configured to compare one of the first and second binary data with the inverse of the other of the first and second binary data, and to deliver said reliability information associated with said pair of memory cells, the logical value of which depends on the result of the comparison, and
- writing means (PROG) for writing said reliability information in the corresponding memory cell of the second assembly.

10. System according to claim 8, wherein the first generation means (MLB1) comprise
- the reading means configured to carry out, for each pair of memory cells of the first assembly,
a) a first reading of the difference between, on the one hand, the current flowing by a first memory cell of said pair increased by a reference current representative of said margin value and, on the other hand, the current flowing by the second memory cell of said pair, so as to obtain a first binary data,
b) a second reading of the difference between the current flowing by the second memory cell increased by the reference current and on the other hand the current flowing by the first cell, so as to obtain a second binary data,
- comparison means configured to
c) compare one of the first and second binary data with the inverse of the other of the first and second binary data, and
d) deliver provisional reliability information associated with said pair of memory cells, the logical value of which depends on the result of the comparison,
- writing means configured to
e) write said provisional reliability information in the corresponding memory cell of the second assembly, and
- control means configured to execute, an odd number of times, the read, compare and write means the steps a), b), c), d) and e) so as to obtain an odd number of stored provisional reliability information, and
- selection means configured to carry out a majority vote on the logical values of the provisional reliability information, so as to select said reliability information.

11. System according to one of the preceding claims taken in combination with claim 4, wherein the processing means (MT) comprise second generation means (MGEN2) configured to generate said group of output data at least from the differential readings of the effective threshold voltages of the state transistors of the pairs of memory cells, and said reliability information of these pairs of memory cells.

12. System according to claim 11, wherein the second generation means (MGEN2) are configured to generate said group of output data based on the differential readings of the effective threshold voltages of the state transistors of the pairs of memory cells, the addresses of the columns in which said pairs of memory cells are located and said reliability information of these pairs of memory cells.

13. System according to claim 12, wherein the first generation means (MGEN2) comprise
- said reading means (LECT) configured to carry out for each pair of memory cells, said differential reading so as to obtain a first binary information having a first logical value,
- reversing means configured to invert or not said first logical value according to the logical value of the low weight bit of the address of the column wherein said pair is located and to deliver second binary information having a second logical value, and
- masking means (4) configured to retain the second binary information as output data, only if said pair of memory cells is associated with reliability information designating it as reliable.

14. System according to one of the preceding claims taken in combination with claim 4, wherein the first assembly (1) of memory cells, the second assembly (3) of memory cells and the processing means (MT) are located within the same integrated circuit (IC).

15. System according to claim 14, forming a system-on-chip (SOC) comprising in addition to said same integrated circuit (IC), encoding/decoding means (MEDC) configured to use the group of output data as an encryption/decryption key, control means (6, 7) configured to deliver to said same integrated circuit control logic signals and analogue voltage signals, as well as another non-volatile memory (9).

16. Method for automatically generating a unique code that is not predictable to said output interface of a physically unclonable function device belonging to a system according to one of claims 1 to 15, comprising switching on (S122) the device (DIS) and reading (S124) the effective threshold voltages of the state transistors of the memory cells of said first assembly, the control gates of the state transistors of these memory cells being connected to the ground during said reading.

17. Method for making a physically unclonable function device (DIS) belonging to the system according to claim 4 or 14, comprising making (S120) the device within an integrated circuit and generating and storing (S121) the reliability information during a phase of testing the integrated circuit.
